# FASCICULE DE BREVET EUROPEEN

(11) **EP 1 748 965 B1**
(45) Date de publication et mention de la délivrance du brevet: **02.11.2011**
(21) Numéro de dépôt: 05748639.1
(22) Date de dépôt: 07.04.2005
(51) Int. Cl.: C03C 17/23, C03C 17/36

(54) **SUBSTRAT, NOTAMMENT SUBSTRAT VERRIER, PORTANT UNE COUCHE A PROPRIETE PHOTOCATALYTIQUE MODIFIEE POUR POUVOIR ABSORBER DES PHOTONS DU VISIBLE**
SUBSTRAT, WIE GLASSUBSTRAT, MIT EINER SCHICHT MIT PHOTOKATALYTISCHEN EIGENSCHAFTEN, DIE ZUR ABSORPTION VON PHOTONEN IM SICHTBAREN SPEKTRUM MODIFIZIERT WORDEN IST
SUBSTRATE, SUCH AS A GLASS SUBSTRATE, BEARING A LAYER WITH PHOTOCATALYTIC PROPERTIES WHICH HAS BEEN MODIFIED TO ABSORB PHOTONS IN THE VISIBLE SPECTRUM

(30) Priorité: 09.04.2004 FR 0450728
(43) Date de publication de la demande: 07.02.2007
(73) Titulaire: SAINT-GOBAIN GLASS FRANCE, 92400 Courbevoie (FR)
(72) Inventeur: NADAUD, Nicolas, F-94250 Gentilly (FR); LABROUSSE, Laurent, F-93120 La Courneuve (FR); GUENEAU, Laeticia, F-94300 Vincennes (FR)
(74) Mandataire: Teyssedre, Laurent
(86) Numéro de dépôt international: PCT/FR2005/050214
(87) Numéro de publication internationale: WO 2005/102953

(56) Documents cités:
- US-A1- 2003 003 304
- US-A1- 2003 064 179

## Description

La présente invention concerne les substrats tels que les substrats en verre qui ont été munis d'un revêtement à propriété photocatalytique pour leur conférer une fonction dite anti-salissures ou auto-nettoyante.

Une application importante de ces substrats concerne des vitrages, qui peuvent être d'applications très diverses, des vitrages utilitaires aux vitrages utilisés dans l'électroménager, des vitrages pour véhicules aux vitrages pour bâtiments et mobilier urbain, des éléments de dispositifs d'éclairage.

Elle s'applique aussi aux vitrages réfléchissants du type miroir (miroir pour habitations ou rétroviseur de véhicule) et aux vitrages opacifiés du type allège. Elle s'applique également aux verres ophtalmiques inorganiques ou organiques.

L'invention s'applique de préférence, quelle que soit la nature du substrat, à des substrats sensiblement plans ou bombés.

Les revêtements photocatalytiques ont déjà été étudiés, notamment ceux à base d'oxyde de titane au moins partiellement cristallisé sous forme anatase. Leur capacité à dégrader les salissures d'origine organique ou les micro-organismes sous l'effet de rayonnement UV, en particulier UVA (longueur d'onde : 315-400 nm) est très intéressante. Ils ont aussi souvent un caractère hydrophile, qui permet l'évacuation des salissures minérales par projection d'eau ou, pour les vitrages extérieurs, par la pluie.

L'activité de TiO₂, éventuellement dopé, sous l'effet du rayonnement UV initiant des réactions radicalaires provoquant l'oxydation de composés organiques, est donc tout à fait satisfaisante pour dégrader les salissures organiques, mais cette activité est liée à son exposition au rayonnement UV. C'est pourquoi l'activité auto-nettoyante à l'intérieur d'un bâtiment où très peu de rayonnement UVA pénètre, ou à la lumière artificielle, est pratiquement inexistante.

Sont également connues de l'art antérieur par US 2003/0003304 des couches photocatalytiques en TiO₂ que l'on soumet à un traitement thermique à 150°C sous atmosphère d'azote et d'hydrogène et sous irradiation UV afin d'obtenir une cristallisation de la couche.

La présente invention apporte une solution à cet inconvénient et propose à cet effet des moyens, simples, efficaces, sans danger et non polluants pour modifier la couche à base de TiO₂ afin de lui permettre d'absorber également des photons du visible (plage de 400 - 800 nm) . Il devient donc possible de gagner en activité, d'une part parce que celle-ci n'est plus limitée à la dégradation des salissures sous UV mais s'étend à la dégradation des salissures dans le visible, et, d'autre part parce que cette activité peut être accrue aussi bien sous UV que dans le visible.

La présente invention a pour objet un procédé de fabrication d'un substrat verrier, portant sur au moins une partie d'au moins l'une des ses faces, une couche à propriété photocatalytique, anti-salissures, à base de dioxyde de titane (TiO₂) , laquelle a été appliquée sur le substrat soit directement, soit avec interposition d'au moins une sous-couche fonctionnelle, caractérisé par le fait que l'on conduit un traitement thermique du substrat portant ladite couche à base de TiO₂ sous une atmosphère d'azote ou d'azote et d'au moins un gaz réducteur pendant un laps de temps suffisant pour rendre la couche à base de TiO₂, qui est naturellement capable d'absorber les photons dans la région des UV, également capable d'absorber des photons du visible, et par le fait que le traitement thermique correspond à un traitement de recuit ou à un traitement de trempe dudit substrat verrier.

On peut ainsi traiter une couche à base de TiO₂ appliquée sur un substrat choisi parmi les substrats verriers, les substrats verriers désalcalinisés en surface, lesdits substrats pouvant se présenter sous la forme de plaques, planes ou à faces courbes ou cintrées, monolithiques ou feuilletées.

On peut notamment traiter une couche à base de TiO₂ appliquée sur le substrat avec interposition d'au moins une sous-couche fonctionnelle choisie parmi:
- les sous-couches de croissance hétéroépitaxiale de ladite couche à base de TiO₂, telles que décrites, par exemple, dans la demande de brevet français FR 03/50729 ;
- les sous-couches qui font barrière à la migration des alcalins et qui sont utilisées dans le cas des substrats verriers;
- les sous-couches à fonctionnalité optique ;
- les sous-couches de contrôle thermique ; et
- les sous-couches conductrices.

La migration des alcalins, dont il est question ci-dessus, est susceptible de résulter de l'application de températures excédant 600°C. De telles couches formant barrière aux alcalins pendant des traitements thermiques ultérieurs sont connues, et on peut citer les couches de SiO₂, SiOC, SiOₓN_{y}, Si₃N₄, d'épaisseur par exemple d'au moins 5 ou 10 nm, dans de nombreux cas d'au moins 50 nm, comme décrit dans la demande internationale PCT WO 02/24971.

Les couches à fonctionnalité optique sont notamment des couches anti-reflet, de filtration de rayonnement lumineux, de coloration, diffusante, etc.. On peut citer les couches de SiO₂, Si₃N₄, TiO₂, SnO₂, ZnO.

Les couches de contrôle thermique sont notamment les couches de contrôle solaire, ou les couches dites bas-émissives.

Les couches conductrices sont notamment les couches chauffantes, photovoltaïques, d'antenne ou anti-statiques, parmi ces couches, on peut compter les réseaux de fils conducteurs.

Conformément à la présente invention, on peut traiter une couche à base de dioxyde de titane qui est constituée par du TiO₂ seul ; ou par du TiO₂ en association avec un liant, tel qu'un liant essentiellement minéral comprenant au moins un oxyde métallique semi-conducteur (oxyde de titane, d'étain, d'antimoine, de zinc, de tungstène, de cobalt, de nickel, oxyde mixte de cobalt et de nickel, éventuellement dopés, oxyde mixte choisi parmi les manganites et les cobaltites, les oxydes de zirconium, d'aluminium, éventuellement dopés (WO 02/92879) ; ou par du TiO₂ allié avec, par exemple, les mêmes oxydes que ceux précédemment cités ; ou TiO₂ dopé par exemple par au moins un dopant choisi notamment parmi N ; le niobium, le tantale, le fer, le bismuth, le cobalt, le nickel, le cuivre, le ruthénium, le cérium, le molybdène, le vanadium et le zirconium (EP850204).

Les dopants ou éléments d'alliage peuvent se trouver dans le même réseau cristallin que TiO₂ comme éléments interstitiels ou comme éléments de substitution.

La couche à base de TiO₂ peut avoir été déposée par un procédé sol-gel, ou par un procédé de pyrolyse notamment en phase gazeuse de type CVD, ou par pulvérisation cathodique, à température ambiante, sous vide, le cas échéant assistée par champ magnétique et/ou faisceau d'ions, avec utilisation d'une cible métallique (Ti) ou TiOₓ avec x<2 et d'une atmosphère oxydante, ou avec utilisation d'une cible TiO₂ et d'une atmosphère inerte.

On peut notamment effectuer le dépôt de la couche de TiO₂ par pulvérisation cathodique sous vide, le cas échéant assistée par champ magnétique et/ou faisceau d'ions dans les conditions d'une alimentation en mode à courant continu ou en courant alternatif sous une pression de 1-3 mbar et sous atmosphère d'oxygène + gaz inerte tel que l'argon à partir d'une cible de Ti ou TiOₓ, x = 1,5 à 2.

Le TiO₂ produit par la pulvérisation cathodique, du fait qu'il est soumis au traitement thermique selon l'invention, se présente à l'état cristallisé sous une forme photocatalytiquement active (au moins partiellement anatase) même si au départ il n'était pas sous cette forme. En effet, au départ, TiO₂ peut être amorphe ou cristallisé partiellement ou totalement anatase ou rutile ou anatase/rutile.

Conformément à la présente invention, on peut traiter une couche à base de TiO₂ ayant une épaisseur notamment au plus égale à 1 im, notamment de 5 nm à 1 im, en particulier de 5 nm à 800 nm. Dans le cas d'une couche à base de TiO₂ déposée par une technique sol-gel, l'épaisseur peut être de 5 à 800 nm ; dans le cas d'une couche de TiO₂ déposée par pyrolyse, l'épaisseur peut être de 5 à 200 nm ; et dans le cas d'une couche déposée par pulvérisation cathodique, l'épaisseur peut être de 5 à 200 nm.

Le traitement thermique selon l'invention peut être avantageusement conduit à une température allant jusqu'à 700°C. Le traitement thermique peut correspondre à un traitement de bombage-trempe d'un substrat verrier comportant une couche photocatalytique en face 4 et une couche de contrôle solaire ou bas-émissive (contrôle thermique) en face 3, dans un double vitrage dont les faces sont notées 1-2-3-4, la face 4 étant tournée vers l'intérieur du bâtiment.

Le traitement thermique selon l'invention peut être conduit sous une pression de 1 atmosphère (1,013 x 10⁵ Pa).

Selon l'invention, on conduit avantageusement le traitement thermique pendant un laps de temps allant de fractions de secondes (recuit flash) à quelques heures. L'homme du métier saura régler la durée du traitement en fonction des paramètres tels que l'épaisseur de la couche à base de TiO₂, la température de traitement, l'épaisseur du verre...

On peut ainsi mentionner, à titre d'exemple, une durée de traitement de 4 à 8 minutes à 500°C, avec 4°C/min de montée en température pour atteindre le palier et descente naturelle après le palier pour revenir à la température ambiante, dans le cas d'une couche à base de TiO₂ déposée par magnétron. On peut également mentionner une durée de traitement de 2 heures à 450 °C avec une montée en température de 100°C/30 min pour atteindre le palier, dans le cas d'une couche à base de TiO₂ déposée par le procédé sol-gel.

Comme déjà indigué, on peut effectuer un traitement thermique à une température allant jusqu'à 700°C, ce qui correspond à une trempe, auquel cas on effectue un refroidissement rapide du substrat. L'homme du métier saura adapter les paramètres du procédé pour éviter, par un chauffage trop fort ou trop long que TiO₂ ne cristallise sous la mauvaise forme (rutile), et un chauffage trop faible ou trop court, ne produisant pas alors l'effet recherché.

Conformément à la présente invention, on utilise, comme gaz réducteur, de préférence au moins l'un parmi l'hydrogène et les hydrocarbures tels que le méthane, le rapport en volume azote:gaz réducteur(s) étant notamment compris entre 100 : 0 et 50 : 50. Dans le cas des mélanges, on peut mentionner des rapports en volume azote : gaz réducteur (s) de 99 : 1 à 50 : 50, en particulier de 95 : 5 à 90 : 10, notamment pour N₂ : H₂.

La présente invention porte également sur un substrat verrier portant, sur au moins une partie d'au moins l'une de ses faces, une couche à propriété photocatalytique, anti-salissures, à base de dioxyde de titane (TiO₂) , laquelle a été appliquée sur le substrat soit directement, soit avec interposition d'au moins une sous-couche fonctionnelle, ledit substrat ayant été fabriqué par le procédé tel que défini ci-dessus.

Ledit substrat peut comporter au moins une sur-couche fonctionnelle ou de protection, telle qu'une couche de SiO₂, SiOC, SiO₂ :Al, îlots métalliques Pd, Pt, Ag.

La présente invention porte également sur les applications suivantes :

Application du substrat essentiellement transparent à la fabrication de vitrages auto-nettoyants, notamment anti-buée, anti-salissures et anti-condensation, notamment des vitrages pour le bâtiment du type double-vitrage, des vitrages pour véhicules du type pare-brise, lunette arrière, vitres latérales d'automobiles, des vitrages pour trains, avions, bateaux, des vitrages utilitaires comme des verres d'aquarium, de vitrine, de serre, d'ameublement intérieur, de mobilier urbain, de miroirs, des écrans de système d'affichage du type ordinateur, télévision, téléphone, des vitrages électrocommandables comme des vitrages électrochromes, à cristaux liquides, électroluminescents, des vitrages photovoltaïques, d'éléments, tels que couvercles, de dispositifs d'éclairage.

Les exemples suivants illustrent la présente invention sans toutefois en limiter la portée.

### EXEMPLE 1 : EMPILEMENT VERRE/ SiO₂ : Al /TiO₂

Sur des plaques de verre d'une épaisseur de 4 mm, on a effectué le dépôt d'une couche de SiO₂ : AI de 150nm et d'une couche de TiO₂ de 100 nm d'épaisseur par pulvérisation cathodique assistée par champ magnétique (magnétron) dans les conditions suivantes :
- couche de SiO₂ : AI à partir d'une cible Si : AI, avec une alimentation en mode puisé (fréquence de changement de polarité de 40 kHz) sous une pression de 2 x 10"³ mbar (0,2 Pa), une puissance de 2000 W, et 14 sccm d'Ar et 16 sccm d'O₂ ;
- couche de TiO₂ à partir d'une cible de TiOₓ, avec une alimentation polarisée en courant continu, sous une pression de 24 x 10∼³ mbar (2,4 Pa) , une puissance de 2000 W, 200 sccm d'Ar et 2 sccm d'O₂.

### EXEMPLE 2 : RECUIT DE L'EMPILEMENT SOUS DIFFERENTES ATMOSPHERES

On a placé les plaques préparées à l'Exemple 1 dans une enceinte à atmosphère contrôlée soit d'air, soit d'azote, soit d'azote hydrogéné (N₂/H₂ = 95/5 v/v) et on a conduit le traitement thermique pendant différentes durées (jusqu'à 16 minutes) et à pression atmosphérique à 500°C, avec une montée en température de 4°C/min, et un refroidissement naturel.

On a ensuite étudié les différentes plaques.

### EXEMPLE 3 : RESULTATS

### EVALUATATION DE L'ACTIVITE PHOTOCATALYTIQUE

On a évalué l'activité photocatalytique de la couche de TiO₂ des différentes plaques de l'Exemple 2, selon le test de photodégradation de l'acide stéarique (TAS) suivi par transmission infrarouge, comme décrit dans la demande internationale PCT WO 00/75087.

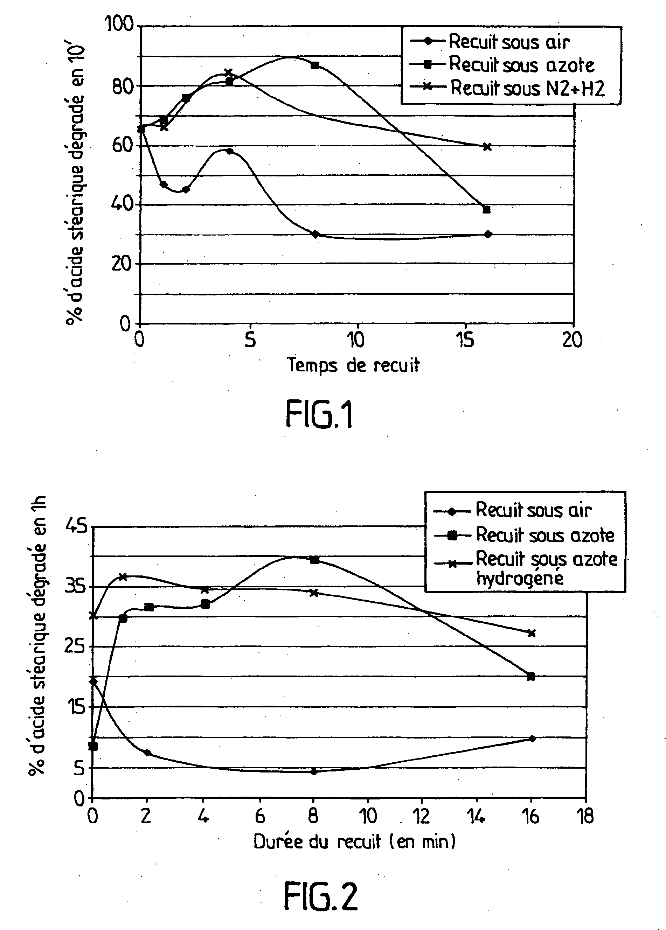

Les résultats sont rapportés sur la Figure 1 qui donne le pourcentage d'acide stéarique dégradé après 10 min d'exposition à des lampes UV (50 W/m² dans l'UVA), pour différents temps de recuit sous les atmosphères de recuit sous air (référence), sous N₂ et sous N₂ + H₂.

On a évalué cette même activité par le TAS après 1h ou 2 heures d'exposition à des tubes émettant essentiellement dans le visible (lampes d'éclairage classiques (tube néon) de 1,4 W/m² dans l'UVA), les résultats étant rapportés sur les Figures 2 (1 heure) et 3 (2 heures) .

### COMPARAISON DES SPECTRES D'ABSORPTION

La comparaison des spectres d'absorptions pour les différents types de recuit : sous air, sous N₂ ou sous N₂ + H₂, montre des différences d'absorption en fonction de l'atmosphère de traitement.

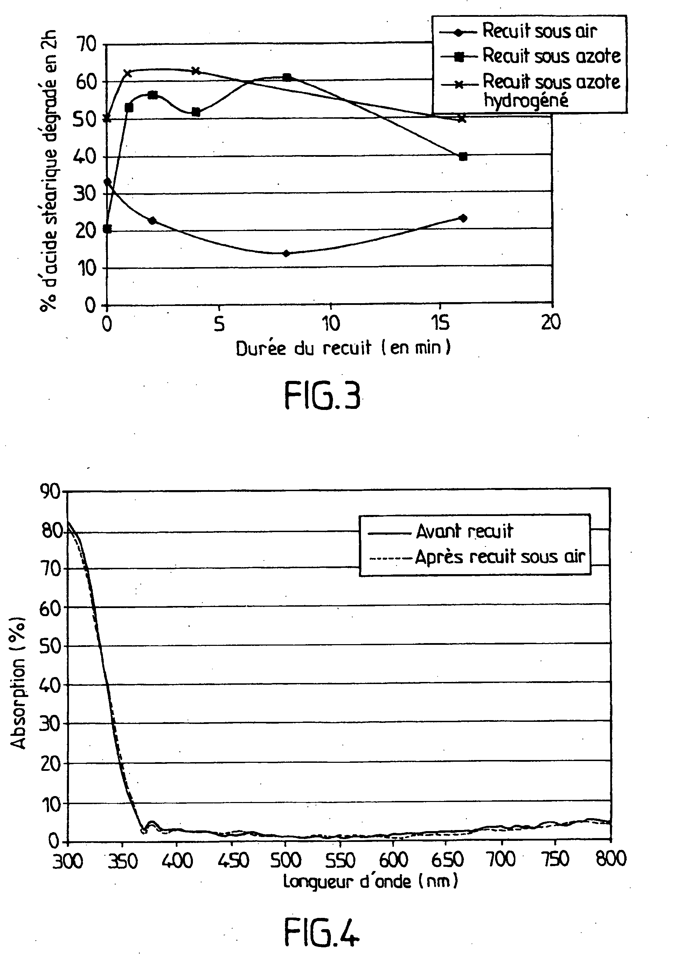

Figure 4 : Comparaison des absorptions avant et après un recuit de 8 minutes sous air pour un empilement contenant 100 nm de TiO₂.

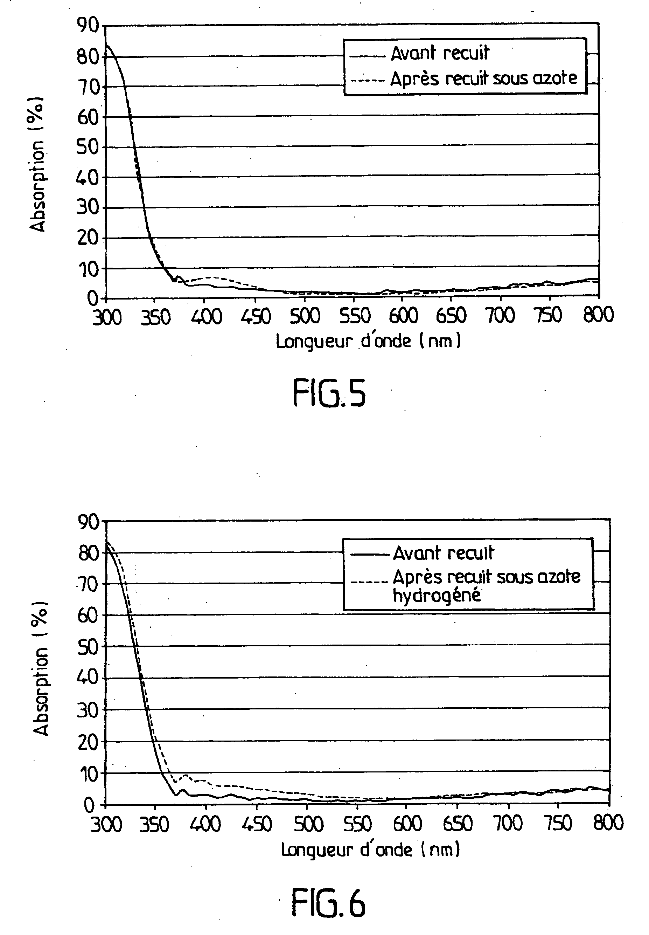

Figure 5 : Comparaison des absorptions avant et après un recuit de 8 minutes sous azote pour un empilement contenant 100 nm de TiO₂.
Figure 6 _{:} Comparaison des absorptions avant et après un recuit de 8 minutes sous azote hydrogéné pour un empilement contenant 100 nm de TiO₂.

Pour le recuit sous air, les absorptions avant et après traitement thermique sont identiques. En revanche, après recuit sous azote ou azote hydrogéné, l'absorption augmente après traitement thermique dans le début du spectre visible.

Ces résultats montrent qu'il est possible d'obtenir une photoactivité dans le visible à des niveaux intéressants pour des applications autonettoyantes en intérieur pour des empilements contenant simplement 100 nm de TiO₂, à condition de réaliser le traitement thermique dans une atmosphère d'azote ou d'azote + gaz réducteur(s).

## Revendications

1. Procédé de fabrication d'un substrat verrier, portant sur au moins une partie d'au moins l'une de ses faces, une couche à propriété photocatalytique, anti-salissures, à base de dioxyde de titane (TiO₂) , laquelle a été appliquée sur le substrat verrier soit directement, soit avec interposition d'au moins une sous-couche fonctionnelle, **caractérisé par le fait que** l'on conduit un traitement thermique du substrat portant ladite couche à base de TiO₂ sous une atmosphère d'azote ou d'azote et d'au moins un gaz réducteur pendant un laps de temps suffisant pour rendre la couche à base de TiO₂, qui est naturellement capable d'absorber les photons dans la région des UV, également capable d'absorber des photons du visible, et **par le fait que** le traitement thermique correspond à un traitement de recuit ou à un traitement de trempe dudit substrat verrier.

2. Procédé selon la revendication 1, **caractérisé par le fait que** l'on traite une couche à base de TiO₂ appliquée sur un substrat choisi parmi les substrats verriers, les substrats verriers désalcalinisés en surface, lesdits substrats pouvant se présenter sous la forme de plaques, planes ou à faces courbes ou cintrées, monolithiques ou feuilletées.

3. Procédé selon l'une des revendications 1 et 2, **caractérisé par le fait que** l'on traite une couche à base de TiO₂ appliquée sur le substrat avec interposition d'au moins une sous-couche fonctionnelle choisie parmi :
- les sous-couches de croissance hétéroépitaxiale de ladite couche à base de TiO₂ ;
- les sous-couches qui font barrière à la migration des alcalins;
- les sous-couches à fonctionnalité optique ;
- les sous-couches de contrôle thermique ; et
- les sous-couches conductrices.

4. Procédé selon l'une des revendications 1 à 3, **caractérisé par le fait que** l'on traite une couche à base de dioxyde de titane qui est constituée par du TiO₂ seul, ou par du TiO₂ en association avec un liant, ou par du TiO₂ allié ou dopé.

5. Procédé selon l'une des revendications 1 à 4, **caractérisé par le fait que** l'on traite une couche à base de TiO₂ ayant une épaisseur au plus égale à 1µm, notamment de 5 nm à 1µm, en particulier de 5 nm à 800 nm.

6. Procédé selon l'une des revendications 1 à 5, **caractérisé par le fait que** l'on conduit le traitement thermique à une température allant jusqu'à 700°C.

7. Procédé selon l'une des revendications 1 à 6, **caractérisé par le fait que** l'on conduit le traitement thermique pendant un laps de temps allant de quelques fractions de secondes à quelques heures.

8. Procédé selon l'une des revendications 1 à 7, **caractérisé par le fait que** l'on utilise, comme gaz réducteur, au moins l'un parmi l'hydrogène et les hydrocarbures tels que le méthane, le rapport en volume azote:gaz réducteur(s) étant notamment compris entre 100 : 0 et 50 : 50.

9. Procédé selon l'une des revendications 1 à 8, **caractérisé par le fait que** l'on effectue le dépôt de la couche de TiO₂ par pulvérisation cathodique, à température ambiante, sous vide, le cas échéant assistée par champ magnétique et/ou faisceau d'ions, avec utilisation d'une cible métallique (Ti) ou TiOₓ avec x<2 et d'une atmosphère oxydante, ou avec utilisation d'une cible TiO₂ et d'une atmosphère inerte.

10. Procédé selon l'une des revendications 1 à 8, **caractérisé par le fait que** l'on effectue le dépôt de la couche de TiO₂ par un procédé de pyrolyse en phase gazeuse de type CVD.

11. Procédé selon l'une des revendications 1 à 8, **caractérisé par le fait que** l'on effectue le dépôt de la couche de TiO₂ par un procédé sol-gel.

12. Substrat verrier portant, sur au moins une partie d'au moins l'une de ses faces, une couche à propriété photocatalytique, anti-salissures, à base de dioxyde de titane (TiO₂) , laquelle a été appliquée sur le substrat soit directement, soit avec interposition d'au moins une sous-couche fonctionnelle, ledit substrat ayant été fabriqué par le procédé tel que défini à l'une des revendications 1 à 11.

13. Application du substrat essentiellement transparent selon la revendication 12, à la fabrication de vitrages auto-nettoyants, notamment anti-buée, anti-salissures et anti-condensation, notamment des vitrages pour le bâtiment du type double-vitrage, des vitrages pour véhicules du type pare-brise, lunette arrière, vitres latérales d'automobiles, des vitrages pour trains, avions, bateaux, des vitrages utilitaires comme des verres d'aquarium, de vitrine, de serre, d'ameublement intérieur, de mobilier urbain, de miroirs, des écrans de système d'affichage du type ordinateur, télévision, téléphone, des vitrages électrocommandables comme des vitrages électrochromes, à cristaux liquides, électroluminescents, des vitrages photovoltaïques, d'éléments de dispositifs d'éclairage.

## Claims

1. A process for manufacturing a glass substrate, bearing on at least part of at least one of its faces, a film having a photocatalytic antisoiling property, based on titanium dioxide (TiO₂), which has been applied to the substrate either directly, or with interposition of at least one functional subfilm, **characterized in that** a heat treatment is carried out on the substrate bearing said TiO₂-based film in a nitrogen atmosphere or an atmosphere containing nitrogen and at least one reducing gas for a period of time sufficient to make the TiO₂-based film, which is naturally capable of absorbing photons in the UV region, also capable of absorbing photons in the visible and/or to enhance the photocatalytic property of said TiO₂-based film, and **in that** the heat treatment corresponds to an annealing treatment or to a toughening treatment carried out on said glass substrate.

2. The process as claimed in claim 1, **characterized in that** a TiO₂-based film applied to a substrate chosen from glass substrates, surface-dealkalized glass substrates, it being possible for said substrates to be in the form of plates, whether plane or having curved faces, and whether monolithic or laminated.

3. The process as claimed in either of claims 1 and 2, **characterized in that** a TiO₂-based film applied to the substrate with interposition of at least one functional subfilm chosen from:
- subfilms grown heteroepitaxially from said TiO₂-based film;
- subfilms that form a barrier to the migration of alkali metals;
- subfilms having an optical functionality;
- thermal control subfilms; and
- conducting subfilms,
is treated.

4. The process as claimed in one of claims 1 to 3, **characterized in that** a film based on titanium dioxide consisting of TiO₂ alone, or of TiO₂ combined with a binder, or alloyed or doped TiO₂, is treated.

5. The process as claimed in one of claims 1 to 4, **characterized in that** a TiO₂-based film having a thickness of at most 1 µm, especially 5 nm to 1 µm and in particular 5 nm to 800 nm is treated.

6. The process as claimed in one of claims 1 to 5, **characterized in that** a heat treatment is carried out at a temperature of up to 700°C.

7. The process as claimed in one of claims 1 to 6, **characterized in that** the heat treatment is carried out for a period of time ranging from a few fractions of a second to several hours.

8. The process as claimed in one of claims 1 to 7, **characterized in that** at least one gas taken from hydrogen and hydrocarbons, such as methane, is used as reducing gas, the nitrogen/reducing gas volume ratio being especially between 100/0 and 50/50.

9. The process as claimed in one of claims 1 to 8, **characterized in that** the TiO₂ film is deposited by room-temperature vacuum sputtering, possibly magnetron sputtering and/or ion beam sputtering, using a metal (Ti) or TiOₓ target (where x < 2) and an oxidizing atmosphere, or using a TiO₂ target and an inert atmosphere.

10. The process as claimed in one of claims 110 to 118, **characterized in that** the TiO₂ film is deposited by a gas pyrolysis process of the CVD type.

11. The process as claimed in one of claims 1 to 8, **characterized in that** the TiO₂ film is deposited by a sol-gel process.

12. A glass substrate bearing, on at least one part of at least one of its faces, a film having a photocatalytic antisoiling property, based on titanium dioxide (TiO₂), which has been applied to the substrate either directly, or by interposition of at least one functional subfilm, said TiO₂ film having been manufactured by the process as defined in one of claims 1 to 11.

13. The application of the essentially transparent substrate as claimed in claim 12 to the manufacture of self-cleaning, especially antifogging, antisoiling and anticondensing, glazing, especially glazing for buildings, of the double-glazing type, glazing for vehicles, of the automobile windshield, rear window or side window type, glazing for trains, aircraft and ships, utilitarian glazing, such as aquarium glass, shop window glass or greenhouse glass, glazing for interior furnishings, glazing for urban furniture, mirrors, screens for display systems of the computer, television or telephone type, electrically controllable glazing, such as electrochromic, liquid-crystal or electroluminescent glazing, photovoltaic glazing, and components of illumination devices.

## Patentansprüche

1. Verfahren zur Herstellung eines Glassubstrats, das auf wenigstens einem Teil wenigstens einer seiner Seiten eine schmutzabweisende Schicht mit photokatalytischer Eigenschaft auf der Basis von Titandioxid (TiO₂) trägt, die entweder direkt oder unter Zwischenlegen wenigstens einer Funktionsunterschicht auf das Glassubstrat aufgebracht worden ist, **dadurch gekennzeichnet, dass** eine Wärmebehandlung des die TiO₂-basierte Schicht tragenden Substrats unter einer Stickstoffatmosphäre oder einer Atmosphäre aus Stickstoff und wenigstens einem Reduktionsgas über einen Zeitraum durchgeführt wird, der ausreichend ist, um die TiO₂-basierte Schicht, die von Natur aus in der Lage ist, die Photonen im UV-Bereich zu absorbieren, auch in die Lage zu versetzen, Photonen des sichtbaren Bereichs zu absorbieren, und dadurch, dass die Wärmebehandlung einer Behandlung zum Spannungsfreimachen oder einer Behandlung zum Vorspannen des Glassubstrats entspricht.

2. Verfahren nach Anspruch 1, **dadurch gekennzeichnet, dass** eine TiO₂-basierte Schicht behandelt wird, die auf ein Substrat aufgebracht ist, das aus Glassubstraten, oberflächlich entalkalisierten Glassubstraten ausgewählt ist, wobei die Substrate in Form von ebenen Platten oder Platten mit gebogenen oder gewölbten Flächen, monolithischen Platten oder Verbundplatten vorliegen können.

3. Verfahren nach einem der Ansprüche 1 und 2, **dadurch gekennzeichnet, dass** eine TiO₂-basierte Schicht behandelt wird, die auf das Substrat unter Zwischenlegen wenigstens einer Funktionsunterschicht aufgebracht ist, welche ausgewählt ist aus:
- Unterschichten zum heteroepitaktischen Aufwachsen der TiO₂-basierten Schicht,
- Unterschichten, welche die Alkalimigration verhindern,
- Unterschichten mit optischer Funktionalität,
- Unterschichten zur Wärmekontrolle und
- leitenden Unterschichten.

4. Verfahren nach einem der Ansprüche 1 bis 3, **dadurch gekennzeichnet, dass** eine Titandioxid-basierte Schicht behandelt wird, die nur von TiO₂ oder von TiO₂ in Kombination mit einem Bindemittel oder von legiertem oder dotiertem TiO₂ gebildet ist.

5. Verfahren nach einem der Ansprüche 1 bis 4, **dadurch gekennzeichnet, dass** eine TiO₂-basierte Schicht mit einer Dicke von höchstens gleich 1 µm, insbesondere von 5 nm bis 1 µm, insbesondere von 5 nm bis 800 nm behandelt wird.

6. Verfahren nach einem der Ansprüche 1 bis 5, **dadurch gekennzeichnet, dass** die Wärmebehandlung bei einer Temperatur von bis zu 700 °C durchgeführt wird.

7. Verfahren nach einem der Ansprüche 1 bis 6, **dadurch gekennzeichnet, dass** die Wärmebehandlung über einen Zeitraum von einigen Sekundenbruchteilen bis zu einigen Stunden durchgeführt wird.

8. Verfahren nach einem der Ansprüche 1 bis 7, **dadurch gekennzeichnet, dass** als Reduktionsgas wenigstens eines aus Wasserstoff und Kohlenwasserstoffen, wie Methan, verwendet wird, wobei das Volumenverhältnis von Stickstoff zu Reduktionsgas(en) insbesondere im Bereich zwischen 100 : 0 und 50 : 50 liegt.

9. Verfahren nach einem der Ansprüche 1 bis 8, **dadurch gekennzeichnet, dass** das Abscheiden der TiO₂-Schicht mittels Kathodenzerstäubung, bei Raumtemperatur, unter Vakuum, gegebenenfalls durch Magnetfeld und/oder Ionenstrahl unterstützt, unter Verwendung eines Metalltargets (Ti) oder TiOₓ, mit x < 2, und einer oxidierenden Atmosphäre, oder unter Verwendung eines TiO₂-Targets und einer inerten Atmosphäre vollzogen wird.

10. Verfahren nach einem der Ansprüche 1 bis 8, **dadurch gekennzeichnet, dass** das Abscheiden der TiO₂-Schicht mittels eines Gasphasenpyrolyseverfahrens vom Typ CVD durchgeführt wird.

11. Verfahren nach einem der Ansprüche 1 bis 8, **dadurch gekennzeichnet, dass** das Abscheiden der TiO₂-Schicht mittels eines Sol-Gel-Verfahrens durchgeführt wird.

12. Glassubstrat, das auf wenigstens einem Teil wenigstens einer seiner Seiten eine schmutzabweisende Schicht mit photokatalytischer Eigenschaft auf der Basis von Titandioxid (TiO₂) trägt, die entweder direkt oder unter Zwischenlegen wenigstens einer Funktionsunterschicht auf das Substrat aufgebracht worden ist, wobei das Substrat durch das in einem der Ansprüche 1 bis 11 definierte Verfahren hergestellt worden ist.

13. Anwendung des im Wesentlichen transparenten Substrats nach Anspruch 12, auf die Herstellung von selbstreinigenden, insbesondere beschlaghemmenden, schmutzabweisenden und kondensationshemmenden Scheiben, insbesondere Scheiben für das Bauwesen vom Typ Doppelverglasung, Scheiben für Fahrzeuge vom Typ Windschutzscheibe, Heckscheibe, Fahrzeugseitenscheiben, Scheiben für Züge, Flugzeuge, Schiffe, Nutzverglasung wie Gläser für Aquarien, Vitrinen, Treibhäuser, Inneneinrichtung, Straßeneinrichtung, Spiegel, Bildschirme von Anzeigesystemen vom Typ Computer, Fernseher, Telefone, elektrisch steuerbare Scheiben wie elektrochrome Scheiben, Flüssigkristallscheiben, elektrolumineszierende Verglasung, Photovoltaik-Verglasung, von Elementen von Beleuchtungseinrichtungen.
